# EUROPÄISCHE PATENTANMELDUNG

(11) **EP 2 669 853 A1**
(43) Veröffentlichungstag der Anmeldung: **04.12.2013**
(21) Anmeldenummer: 13002564.6
(22) Anmeldetag: 16.05.2013
(51) Int. Cl.: G06K 19/077, B32B 27/08

(54) **Tragbarer Datenträger**

(30) Priorität: 29.05.2012 DE 102012010561
(71) Anmelder: Giesecke & Devrient GmbH, 81677 München (DE)
(72) Erfinder: Endres, Günter, 81547 München (DE); Griesmeier, Robert, 83052 Bruckmühl (DE)

(57) **Zusammenfassung**

Die Erfindung betrifft einen tragbaren Datenträger, insbesondere eine Chipkarte mit kontaktbehafteter Schnittstelle, umfassend einen Kartenkörper (2), der sich flächig in einer Kartenebene erstreckt und in dem elektrische und/ oder elektronische Bauelemente (3, 4) eingebracht sind. Die Erfindung zeichnet sich dadurch aus, dass in dem Kartenkörper (2) zumindest eine flexible Schicht (5) ausgebildet ist, welche sich in Draufsicht auf die Kartenebene in zumindest einem Teilbereich des Kartenkörpers (2) erstreckt.

## Beschreibung

Die Erfindung betrifft einen tragbaren Datenträger und insbesondere eine Chipkarte mit kontaktbehafteter Schnittstelle. Eine solche Chipkarte kann ausschließlich über eine kontaktbehaftete Schnittstelle verfügen oder als sogenannte DI-Chipkarte (DI = Dual-Interface) oder als sogenannte Hybridkarte ausgestaltet sein, welche neben der kontaktbehafteten Schnittstelle auch eine kontaktlose Schnittstelle mit entsprechender Antenne und/ oder Spule umfasst.

Bei kartenförmigen tragbaren Datenträgern besteht das Problem, dass deren Kartenkörper einer starken mechanischen Beanspruchung durch Biegungen unterliegen. Hierdurch können insbesondere in Bereichen des Kartenkörpers, in denen sich die elektrischen bzw. elektronischen Bauelemente oder andere Elemente des Datenträgers befinden, sehr hohe mechanische Spannungen auftreten, die zu Rissbildung führen können. Die Rissbildung kann dann zum Bruch und unter Umständen zum Funktionsausfall des Datenträgers führen. Dies ist besonders kritisch bei den oben erwähnten DI-Chipkarten oder Hybridkarten, da eine Rissbildung auch ohne Bruch der Karte zum Unterbrechen der in dem Kartenkörper eingebrachten Antenne und/ oder Spule führen kann. Ebenso kann eine Rissbildung bei höherwertigen Karten aus optischen Gründen unerwünscht sein.

In der Druckschrift DE 197 25 576 A1 ist ein kartenförmiger Datenträger beschrieben, in dessen Kartenkörper eine Indikatorschicht eingebracht ist, deren physische Eigenschaften bereits bei solchen mechanischen und/oder thermischen Belastungen des Datenträgers irreversibel verändert werden, bei denen die physischen Eigenschaften des Kartenkörpers noch nicht irreversibel verändert sind.

Aufgabe der Erfindung ist es, einen tragbaren Datenträger zu schaffen, dessen Kartenkörper stabil gegenüber mechanischen Belastungen ist.

Diese Aufgabe wird durch den tragbaren Datenträger gemäß Patentanspruch 1 bzw. des Verfahrens zur Herstellung eines tragbaren Datenträgers gemäß Patentanspruch 9 gelöst. Weiterbildungen der Erfindung sind in den abhängigen Ansprüchen definiert.

Der erfindungsgemäße tragbare Datenträger, der insbesondere eine Chipkarte mit rein kontaktbehafteter Schnittstelle bzw. eine DI-Chipkarte oder eine Hybridkarte ist, umfasst einen Kartenkörper, der sich flächig in einer Kartenebene erstreckt und in dem elektrische und/oder elektronische Bauelemente eingebracht sind, welche die Funktionalität des Datenträgers gewährleisten. Der tragbare Datenträger zeichnet sich dadurch aus, dass in dem Kartenkörper zumindest eine flexible Schicht ausgebildet ist, welche sich in Draufsicht auf die Kartenebene in zumindest einem Teilbereich des Kartenkörpers erstreckt. Mit dieser flexiblen Schicht werden durch Biegung auftretende Spannungen im Kartenkörper besser verteilt und hierdurch die mechanische Stabilität verbessert. Auf diese Weise kann einer Rissbildung bzw. einem Bruch des Kartenkörpers entgegengewirkt werden.

In dem erfindungsgemäßen Datenträger können in dem Kartenkörper lediglich eine einzelne flexible Schicht bzw. auch mehrere übereinander liegende Schichten ausgebildet sein. Die übereinander liegenden Schichten können dabei direkt aufeinander folgen bzw. auch durch andere Schichten voneinander beabstandet sein. In einer bevorzugten Ausführungsform umfasst die flexible Schicht Materialen, wie sie in WO 2011/10 40 13 A1 und/ oder WO 2011/10 4014 A1 beschrieben sind.

In einer bevorzugten Ausführungsform des erfindungsgemäßen Datenträgers umfasst die zumindest eine flexible Schicht eine flexible Folie und/oder eine Kleberschicht, wobei mit der Kleberschicht insbesondere eines oder mehrere der elektrischen und/ oder elektronischen Bauelemente im Kartenkörper verklebt sind. Durch die Verwendung einer Kleberschicht übernimmt die flexible Schicht bzw. Folie neben der Erhöhung der Stabilität der Karte auch die Funktion der Befestigung von Bauelementen bzw. Kartenelementen.

In einer weiteren bevorzugten Ausführungsform der Erfindung sind in dem zumindest einen Teilbereich, in dem sich die zumindest eine flexible Schicht erstreckt, eines oder mehrere der elektrischen und/ oder elektronischen Bauelemente vorgesehen. Hierdurch wird die Karte besonders stabil ausgestaltet, denn Risse treten vorzugsweise in Bereichen auf, in denen sich entsprechende Bauelemente bzw. Kartenelemente des Datenträgers befinden.

In einer weiteren Ausgestaltung des erfindungsgemäßen Datenträgers sind die elektrischen und/ oder elektronischen Bauelemente zumindest teilweise in einem Chipmodul integriert, wobei in dem zumindest einen Teilbereich, in dem sich die zumindest eine flexible Schicht erstreckt, zumindest ein Teil des Chipmoduls, insbesondere die Kante des Chipmoduls und/ oder das gesamte Chipmodul, vorgesehen ist. Auf diese Weise wird effizient eine Rissbildung im Bereich des Chipmoduls und insbesondere der Kante des Chipmoduls entgegengewirkt.

In einer weiteren bevorzugten Ausgestaltung des erfindungsgemäßen Datenträgers umfassen die elektrischen und/ oder elektronischen Bauelemente eine Antenne und/ oder Spule, wobei in dem zumindest einen Teilbereich, in dem sich die zumindest eine flexible Schicht erstreckt, zumindest ein Teil der Antenne und/ oder Spule und insbesondere die gesamte Antenne und/ oder Spule vorgesehen ist. Die Antenne und/ oder Spule ist dabei vorzugsweise mit dem oben beschriebenen Chipmodul verbunden. Mit dieser Variante der Erfindung wird effizient einer Unterbrechung der Antenne und/ oder Spule durch Rissbildung und damit einem Ausfall der kontaktlosen Schnittstelle entgegengewirkt.

In einer weiteren Ausgestaltung des erfindungsgemäßen Datenträgers erstreckt sich die zumindest eine flexible Schicht in Draufsicht auf die Kartenebene über den gesamten Kartenkörper. Auf diese Weise kann neben der Erhöhung der Stabilität auch ein effizienter Schutz gegen die Einwirkung von Chemikalien erreicht werden, da die flexible Schicht als Sperrschicht wirkt.

In einer weiteren Ausgestaltung ist in dem Kartenkörper zumindest eine Dämpfungsschicht ausgebildet, welche sich in Draufsicht auf die Kartenebene in zumindest einem Teilbereich des Kartenkörpers erstreckt. Die Dämpfungsschicht kann sich dabei im gleichen Bereich erstrecken wie die flexible Schicht. Gegebenenfalls kann die flexible Schicht auch die Funktion der Dämpfungsschicht übernehmen. Mit der Dämpfungsschicht wird die mechanische Belastbarkeit der Karte nochmals erhöht. Die Dämpfungsschicht nimmt insbesondere Druckkräfte auf, während die flexible Schicht insbesondere Zug- und Scherkräfte aufnimmt, die auf die Karte wirken.

Neben dem oben beschriebenen tragbaren Datenträger betrifft die Erfindung ferner ein Verfahren zur Herstellung eines tragbaren Datenträgers, insbesondere einer Chipkarte mit kontaktbehafteter Schnittstelle. Im Rahmen des Verfahrens wird ein Kartenkörper ausgebildet, der sich flächig in einer Kartenebene erstreckt und in dem elektrische und/ oder elektronische Bauelemente eingebracht werden. Das Verfahren zeichnet sich dadurch aus, dass in dem Kartenkörper zumindest eine flexible Schicht ausgebildet wird, welche sich in Draufsicht auf die Kartenebene in zumindest einem Teilbereich des Kartenkörpers erstreckt. Das Verfahren eignet sich somit zur Herstellung des erfindungsgemäßen Datenträgers.

In einer bevorzugten Variante wird die flexible Schicht über Laminieren und/oder Bedrucken und/ oder Dispensen eingebracht. Vorzugsweise wird als Material das in der WO 2011 /10 4013 A1 und/oder der WO 2011 / 1040 14 A1 beschriebene Material für die flexible Schicht verwendet.

Als flexible Schicht wird in einer bevorzugten Variante eine flexible Folie und/ oder eine Kleberschicht eingebracht, wobei mit der Kleberschicht insbesondere eines oder mehrere der elektrischen und/ oder elektronischen Bauelemente im Kartenkörper verklebt werden. Hierdurch wird die Herstellung des Datenträgers besonders einfach, denn die flexible Schicht übernimmt auch die Aufgabe der Verklebung von Bauelementen bzw. Kartenelementen.

In einer weiteren Ausgestaltung sind in dem zumindest einen Teilbereich, in dem sich die zumindest eine flexible Schicht erstreckt, eines oder mehrere der elektrischen und/oder elektronischen Bauelemente vorgesehen. Vorzugsweise sind die elektrischen und/ oder elektronischen Bauelemente zumindest teilweise in einem Chipmodul integriert, wobei in dem zumindest einen Teilbereich, in dem sich die zumindest eine flexible Schicht erstreckt, zumindest ein Teil des Chipmoduls, insbesondere die Kante des Chipmoduls und/ oder das gesamte Chipmodul, vorgesehen ist. Hierdurch wird ein besonders effizienter Schutz gegen Rissbildung bzw. Bruch an anfälligen Stellen im Bereich des Chipmoduls bzw. dessen Kante erreicht.

Gegebenenfalls können die elektrischen und/oder elektronischen Bauelemente auch eine Antenne und/oder Spule zur kontaktlosen Kommunikation umfassen, wobei in dem zumindest einen Teilbereich, in dem sich die zumindest eine flexible Schicht erstreckt, zumindest ein Teil der Antenne und/ oder Spule und insbesondere die gesamte Antenne und/ oder Spule vorgesehen ist.

In einer weiteren Variante des Herstellungsverfahrens erstreckt sich die flexible Schicht in Draufsicht auf die Kartenebene über den gesamten Kartenkörper. Hierdurch übernimmt die flexible Schicht auch die Funktion einer Sperrschicht zum Schutz gegen die Einwirkung von Chemikalien.

In einer weiteren Variante wird in dem Kartenkörper zumindest eine Dämpfungsschicht ausgebildet, welche sich in Draufsicht auf die Kartenebene in zumindest einem Teilbereich des Kartenkörpers erstreckt. Diese Dämpfungsschicht kann gegebenenfalls im gleichen Teilbereich wie die flexible Schicht angeordnet sein. Ferner kann die flexible Schicht auch die Funktion der Dämpfungsschicht übernehmen.

Ausführungsbeispiele der Erfindung werden nachfolgend anhand der beigefügten Figuren detailliert beschrieben.

Es zeigen:
- Fig. 1: eine Schnittansicht durch eine erste Ausführungsform eines erfindungsgemäßen Datenträgers; und
- Fig. 2: eine Draufsicht auf den tragbaren Datenträger der Fig. 1; und
- Fig. 3: eine Schnittansicht durch eine zweite Ausführungsform eines erfindungsgemäßen Datenträgers, mit einer Ausnehmung für das Chipmodul; und
- Fig. 4: eine Schnittansicht durch eine dritte Ausführungsform eines erfindungsgemäßen Datenträgers, mit einer Ausnehmung für das Chipmodul; und
- Fig. 5: eine Schnittansicht durch eine vierte Ausführungsform eines erfindungsgemäßen Datenträgers, mit einer Ausnehmung für das Chipmodul; und
- Fig. 6: eine Schnittansicht durch eine fünfte Ausführungsform eines erfindungsgemäßen Datenträgers, mit einer Ausnehmung für das Chipmodul.

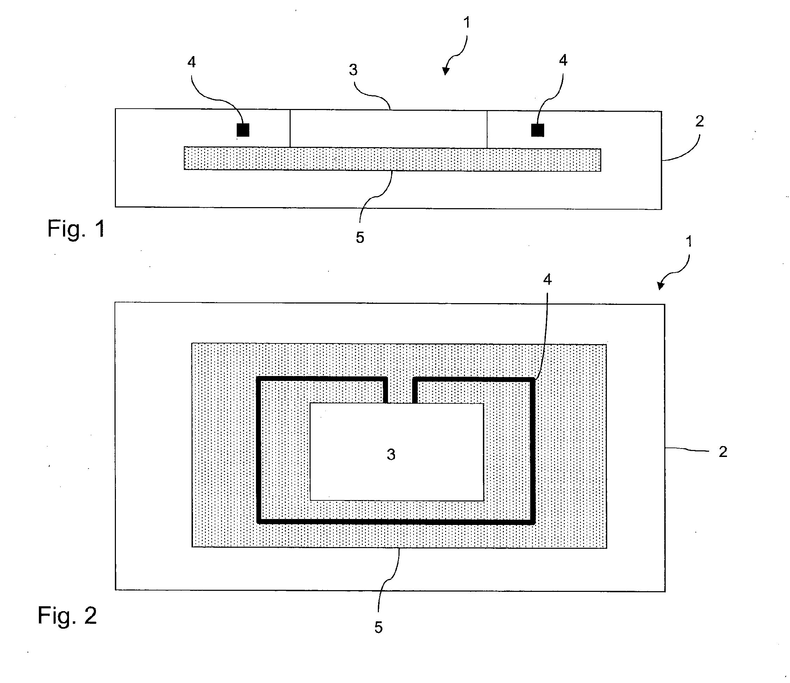

Fig.1 zeigt in Schnittansicht ein erstes Ausführungsbeispiel eines erfindungsgemäßen tragbaren Datenträgers in der Form einer Dual-Interface-Chipkarte 1, welche sowohl über eine kontaktbehaftete als auch eine kontaktlose Schnittstelle kommunizieren kann. Die Chipkarte umfasst einen Kartenkörper 2, in dem ein entsprechendes Chipmodul 3 sowie eine mit dem Modul verbundene Antenne und/ oder Spule 4 angeordnet ist. Über die Antenne und/ oder Spule 4 wird die kontaktlose Kommunikationsschnittstelle basierend auf Nahfeld-Kommunikation gebildet, wohingegen die kontaktbehaftete Schnittstelle über entsprechende (nicht gezeigte) metallische Kontaktfelder realisiert ist. Der Kartenkörper 2 umfasst eine Mehrzahl von übereinander laminierten Schichten bzw. Folien, wobei in Fig. 1 lediglich die erfindungswesentliche flexible Schicht 5 angedeutet ist, welche dazu dient, eine Rissbildung im Aufbau des Kartenkörpers 2 zu vermeiden.

In der Ausführungsform der Fig.1 ist die flexible Schicht teilflächig sowohl unter dem Chipmodul 3 als auch unter der Antenne und/ oder Spule 4 angeordnet. Dies ist auch aus der Draufsicht aus Fig. 2 ersichtlich. Man erkennt dort, dass sich auf der Fläche der flexiblen Schicht 5 sowohl das gesamte Chipmodul 3 als auch die gesamte rechteckige Antenne und/ oder Spule 4 befindet, jedoch am Rand des Kartenkörpers 2 keine flexible Schicht 5 vorhanden ist. Durch die Flexibilität der Schicht 5 werden Risse, welche sich bevorzugt an der Modulkante des Chipmoduls 3 ausbilden, vermieden. Solche Risse sind insbesondere bei Dual-Interface-Karten oder Hybridkarten nachteilig, denn eine Rissbildung kann auch ohne Bruch des Kartenkörpers zu einem Unterbrechen der Antenne und/ oder Spule 4 in der Karte 1 führen. Ferner sind solche Risse für höherwertige Chipkarten aufgrund der höheren Anforderungen bezüglich Lebensdauer und optischer Qualität kritisch. Insbesondere werden bei solchen höherwertigen Karten sichtbare Risse im Kartenkörper auch ohne Funktionsausfall der Karte nicht akzeptiert.

Als Materialien für die flexible Folie werden in bevorzugten Varianten Materialien verwendet, wie sie auch in der WO 2011 / 10 40 13 A1 und/ oder WO 2011 / 10 40 14 A1 beschrieben sind. Anstatt einer einzelnen flexiblen Schicht können gegebenenfalls auch mehrere übereinander liegende flexible Schichten eingesetzt werden, wobei zwischen den flexiblen Schichten gegebenenfalls auch weitere Zwischenschichten angeordnet sein können.

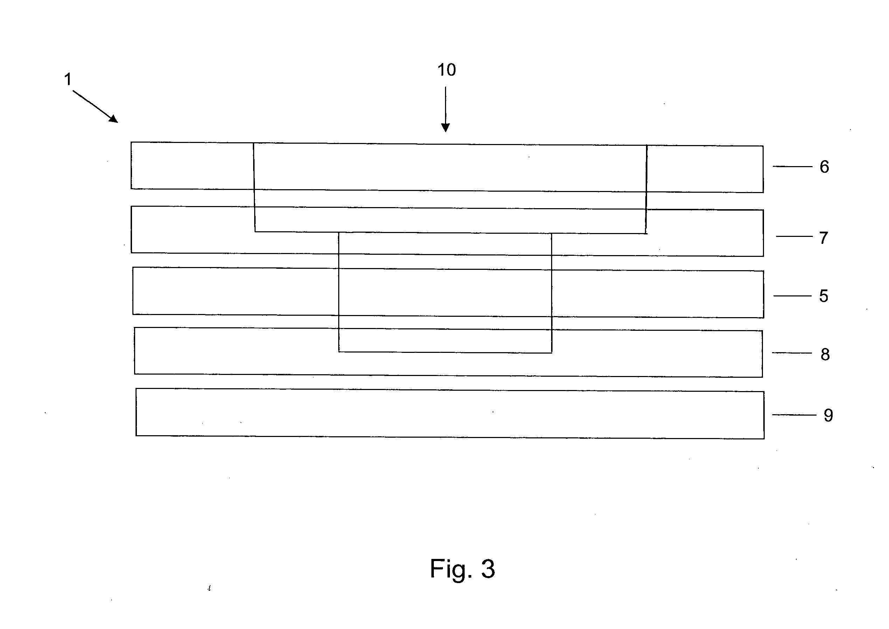

Figur 3 zeigt einen beispielhaften Aufbau der Schichten einer zweiten Ausführungsform eines erfindungsgemäßen tragbaren Datenträgers 1. Der Datenträger 1 weist an der Oberfläche eine transparente Schicht 6 auf. Unter der Schicht 6 befindet sich eine opake Schicht 7. Eine erfindungsgemäße flexible Schicht 5 ist unter der Schicht 7 angeordnet. Die flexible Schicht 5 ist hier vollflächig aufgebracht. Es ist alternativ auch möglich die flexible Schicht 5 teilflächig aufzubringen. Auf der gegenüberliegenden Seite der Schicht 5 ist wieder eine opake Schicht 8 und darunter eine transparente Schicht 9 angeordnet. In den Schichten 6, 7, 5 und 8 befindet sich eine Ausnehmung 10 im Datenträger 1 um ein Chipmodul 3 in die Ausnehmung 10 einzusetzen.

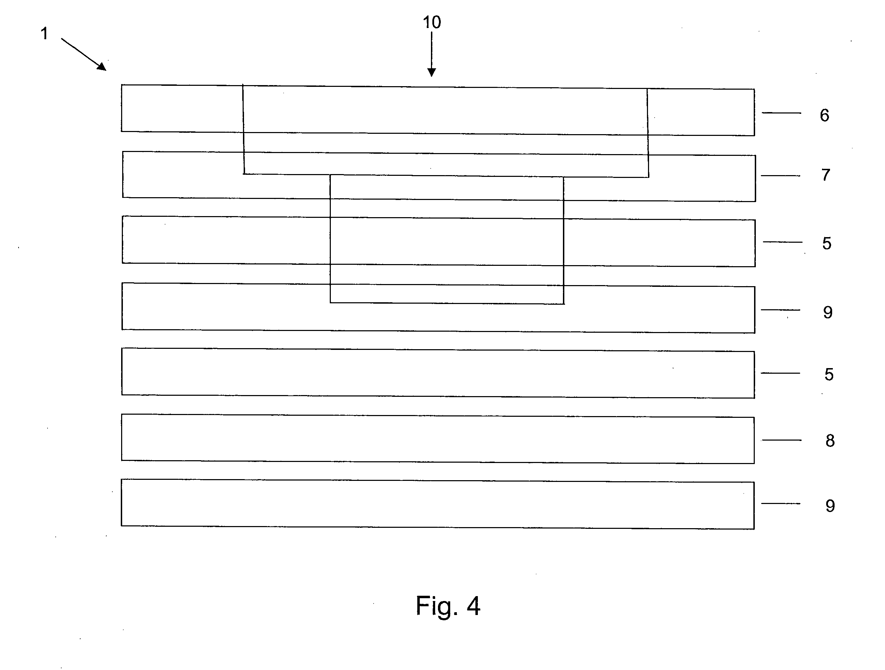

Figur 4 zeigt eine Schnittansicht einer dritten Ausführungsform des erfindungsgemäßen Datenträgers 1. Der wesentliche Unterschied zur zweiten Ausführungsform ist, daß in der dritten Ausführungsform zwei flexible Schichten 5 offenbart sind. Die obersten Schichten 6, 7 und 5 sind identisch zum Aufbau der Schichten des zweiten Ausführungsbeispiels. An eine erste flexible Schicht 5 schließt sich auf der der Schicht 7 gegenüberliegenden Seite der ersten Schicht 5 eine erste transparente Schicht 9 an. Auf der gegenüberliegenden Seite der ersten Schicht 9 wird eine zweite flexible Schicht 5 angeordnet. Darauf folgen wieder eine opake Schicht 8 und eine zweite transparente Schicht 9. Eine Ausnehmung 10 für ein Chipmodul 3 reicht hier durch die Schichten 6, 7, 5 und 9.

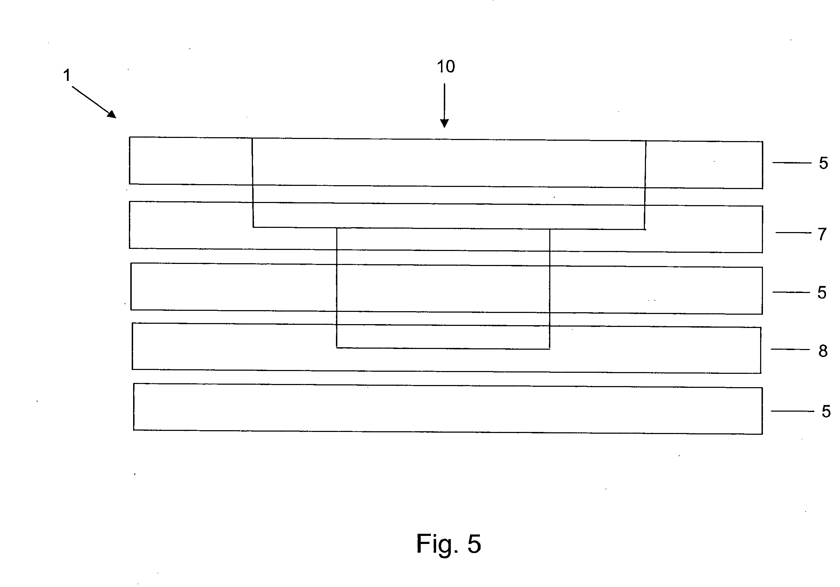

Figur 5 zeigt eine Schnittansicht einer vierten Ausführungsform des erfindungsgemäßen Datenträgers 1. Die vierte Ausführungsform unterscheidet sich von den bisher beschriebenen Ausführungsformen durch drei flexible Schichten 5. Der erfindungsgemäße Datenträger 1 gemäß dem vierten Ausführungsbeispiel umfasst fünf Schichten, wobei die beiden äußersten und die mittlere Schicht durch jeweils mindestens eine flexible Schicht 5 gebildet werden. Zwischen den flexiblen Schichten 5 befinden sich opake Schichten 7 und 8, wobei eine Ausnehmung 10 für ein Chipmodul 3 durch die Schichten 5, 7, 5 und 8 reicht.

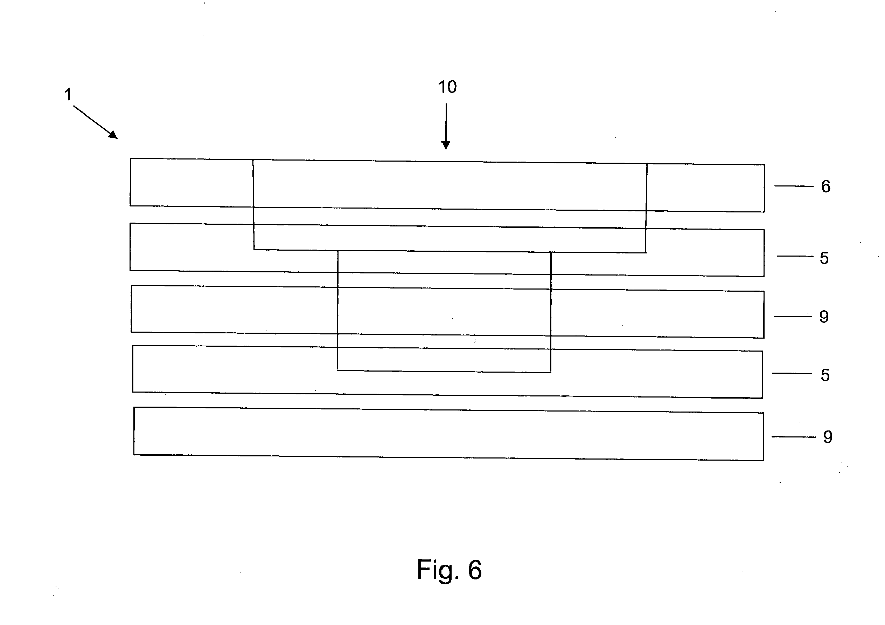

Figur 6 zeigt eine Schnittansicht einer fünften Ausführungsform des erfindungsgemäßen Datenträgers 1. Der wesentliche Unterschied der fünften Ausführungsform zur vierten Ausführungsform ist, dass in der fünften Ausführungsform die flexiblen Schichten 5 nicht außen, sondern innen liegen. Der erfindungsgemäße Datenträger 1 umfasst in Figur 6 wie in Figur 5 auch fünf Schichten, wovon zwei Schichten flexible Schichten 5 sind. Als erste äußerste Schicht wurde hier eine transparente Schicht 6 gewählt. Auf der der Außenseite des Datenträgers gegenüberliegenden Seite der Schicht 6 ist eine erste flexible Schicht 5 angeordnet. Zwischen erster und zweiter flexibler Schicht 5 ist eine erste transparente Schicht 9 angeordnet. Auf der der ersten transparenten Schicht 9 gegenüberliegenden Seite der zweiten flexiblen Schicht 5 ist eine zweite transparente Schicht 9 angeordnet. Eine Ausnehmung 10 für ein Chipmodul 3 reicht hier durch die Schichten 6, 5, 9 und 5.

Zur Vermeidung von Rissen ist es gemäß der Erfindung wichtig, dass mittels der flexiblen Schicht 5 die bei Verwendung des Datenträgers 1 auftretenden Kräfte aufgenommen werden und nicht zu einer Rissbildung im Datenträger 1 führen.

Wie erwähnt, ist in der Ausführungsform der Fig. 1 und Fig. 2 die flexible Schicht 5 nur teilflächig im Kartenkörper 2 ausgebildet. In einer Abwandlung der Erfindung kann sich die Schicht jedoch auch vollflächig über die gesamte Kartenebene der Chipkarte erstrecken, siehe z.B. Figur 3 bis 6. Diese Variante hat den Vorteil, dass neben der Vermeidung von Rissbildung auch ein guter Schutz gegen die Einwirkung von Chemikalien erreicht wird, da die vollflächig aufgebrachte flexible Schicht als eine Sperrschicht wirkt.

Die flexible Schicht bzw. Folie kann je nach Ausgestaltung verschieden aufgebracht werden. Insbesondere kann sie über Auflaminieren, Bedrucken oder Dispensen im Kartenkörper ausgebildet werden. In einer bevorzugten Variante ist die Schicht eine Kleberschicht, die neben der Flexibilisierung auch die Verklebung des Chipmoduls in dem Kartenkörper bewirkt. In diesem Fall ist es nicht erforderlich, dass das Chipmodul mit einem Kleber vorlaminiert wird. In einer weiteren Ausgestaltung kann neben der flexiblen Schicht eine Pufferschicht unter dem Chipmodul angeordnet sein, welche z.B. einer Belastung in Rolleneinzugslesern entgegenwirkt.

Die im Vorangegangenen beschriebene Ausführungsform der Erfindung weist eine Reihe von Vorteilen auf. Insbesondere wird durch die Einbringung einer flexiblen Schicht der Rissbildung bzw. dem Bruch der Karte entgegengewirkt, da eine solche Schicht mechanische Spannungen aufnimmt und über die Karte verteilt. Dies führt zu einer höheren mechanischen Belastbarkeit der Karte, d.h. es können mehr Biegevorgänge der Karte ohne Beschädigung durch Risse durchgeführt werden. Darüber hinaus dient die flexible Schicht ferner auch zum Schutz der Karte gegen Chemikalien. Ferner wird sichergestellt, dass die Optik von hochwertigen Karten nicht durch Risse beeinträchtigt wird.

## Patentansprüche

1. Tragbarer Datenträger, insbesondere Chipkarte mit kontaktbehafteter Schnittstelle, umfassend einen Kartenkörper (2), der sich flächig in einer Kartenebene erstreckt und in dem elektrische und/ oder elektronische Bauelemente (3, 4) eingebracht sind,
**dadurch gekennzeichnet, dass**
in dem Kartenkörper (2) zumindest eine flexible Schicht (5) ausgebildet ist, welche sich in Draufsicht auf die Kartenebene in zumindest einem Teilbereich des Kartenkörpers (2) erstreckt.

2. Datenträger nach Anspruch 1, **dadurch gekennzeichnet, dass** die zumindest eine flexible Schicht (5) eine flexible Folie und/ oder eine Kleberschicht umfasst, wobei mit der Kleberschicht insbesondere eines oder mehrere der elektrischen und/oder elektronischen Bauelemente (3, 4) im Kartenkörper (2) verklebt sind.

3. Datenträger nach einem der vorhergehenden Ansprüche, **dadurch gekennzeichnet, dass** in dem zumindest einen Teilbereich, in dem sich die zumindest eine flexible Schicht (5) erstreckt, eines oder mehrere der elektrischen und/ oder elektronischen Bauelemente (3, 4) vorgesehen sind.

4. Tragbarer Datenträger nach einem der vorhergehenden Ansprüche, **dadurch gekennzeichnet, dass** die elektrischen und/ oder elektronischen Bauelemente (3, 4) zumindest teilweise in einem Chipmodul (3) integriert sind, wobei in dem zumindest einen Teilbereich, in dem sich die zumindest eine flexible Schicht (5) erstreckt, zumindest ein Teil des Chipmoduls (3), insbesondere die Kante des Chipmoduls und/ oder das gesamte Chipmodul (3), vorgesehen ist.

5. Tragbarer Datenträger nach einem der vorhergehenden Ansprüche, **dadurch gekennzeichnet**, das die elektrischen und/oder elektronischen Bauelemente (3, 4) eine Antenne und/ oder Spule (4) umfassen, wobei in dem zumindest einen Teilbereich, in dem sich die zumindest eine flexible Schicht (5) erstreckt, zumindest ein Teil der Antenne und/ oder Spule (4) und insbesondere die gesamte Antenne und/ oder Spule (4) vorgesehen ist.

6. Tragbarer Datenträger nach einem der vorhergehenden Ansprüche, **dadurch gekennzeichnet, dass** sich die zumindest eine flexible Schicht (5) in Draufsicht auf die Kartenebene über den gesamten Kartenkörper (2) erstreckt.

7. Tragbarer Datenträger nach einem der vorhergehenden Ansprüche, **dadurch gekennzeichnet, dass** in dem Kartenkörper (2) zumindest eine Dämpfungsschicht ausgebildet ist, welche sich in Draufsicht auf die Kartenebene in zumindest einem Teilbereich des Kartenkörpers (2) erstreckt.

8. Verfahren zur Herstellung eines tragbaren Datenträgers (1), insbesondere einer Chipkarte mit kontaktbehafteter Schnittstelle, bei dem ein Kartenkörper (2) ausgebildet wird, der sich flächig in einer Kartenebene erstreckt und in dem elektrische und/ oder elektronische Bauelemente (3, 4) eingebracht werden,
**dadurch gekennzeichnet, dass**
in dem Kartenkörper (2) zumindest eine flexible Schicht (5) ausgebildet wird, welche sich in Draufsicht auf die Kartenebene in zumindest einem Teilbereich des Kartenkörpers (2) erstreckt.

9. Verfahren nach Anspruch 8, **dadurch gekennzeichnet, dass** die zumindest eine flexible Schicht (5) über Laminieren und/ oder Bedrucken und/ oder Dispensen eingebracht wird.

10. Verfahren nach einem der Ansprüche 8 bis 9, **dadurch gekennzeichnet, dass** die zumindest eine flexible Schicht (5) eine flexible Folie und/oder eine Kleberschicht umfasst, wobei mit der Kleberschicht insbesondere eines oder mehrere der elektrischen und/oder elektronischen Bauelemente (3, 4) im Kartenkörper (2) verklebt werden.

11. Verfahren nach einem der Ansprüche 8 bis 10, **dadurch gekennzeichnet, dass** in dem zumindest einen Teilbereich, in dem sich die zumindest eine flexible Schicht (5) erstreckt, eines oder mehrere der elektrischen und/ oder elektronischen Bauelemente (3, 4) vorgesehen sind.

12. Verfahren nach einem der Ansprüche 8 bis 11, **dadurch gekennzeichnet, dass** die elektrischen und/ oder elektronischen Bauelemente (3, 4) zumindest teilweise in einem Chipmodul (3) integriert sind, wobei in dem zumindest einen Teilbereich, in dem sich die zumindest eine flexible Schicht (5) erstreckt, zumindest ein Teil des Chipmoduls (3), insbesondere die Kante des Chipmoduls (3) oder das gesamte Chipmodul (3), vorgesehen ist.

13. Verfahren nach einem der Ansprüche 8 bis 12, **dadurch gekennzeichnet, dass** sich die zumindest eine flexible Schicht (5) in Draufsicht auf die Kartenebene über den gesamten Kartenkörper (2) erstreckt.
